# EUROPEAN PATENT SPECIFICATION

(11) **EP 4 495 201 B1**
(45) Date of publication and mention of the grant of the patent: **01.07.2026**
(21) Application number: 23925585.4
(22) Date of filing: 12.12.2023
(51) Int. Cl.: C09J 151/06, C09J 157/02, C09J 151/02, C09J 11/04, C09J 5/06, C08K 3/04, C09J 11/08, H01M 10/42, H01M 50/534

(54) **HOT MELT ADHESIVE FOR EDGE PROTECTION OF ELECTRODE SHEETS, PREPARATION METHOD THEREFOR, AND PROTECTION METHOD THEREOF**
SCHMELZKLEBSTOFF ZUM SCHUTZ DER KANTE EINES POLSTÜCKS, HERSTELLUNGSVERFAHREN DAFÜR UND SCHUTZVERFAHREN DAFÜR
COLLE THERMOFUSIBLE POUR LA PROTECTION DE BORDS DE FEUILLES D'ÉLECTRODE, SON PROCÉDÉ DE PRÉPARATION ET SON PROCÉDÉ DE PROTECTION

(30) Priority: 30.05.2023 CN 202310624534
(43) Date of publication of application: 22.01.2025
(73) Proprietor: Steadychem (Shanghai) Co., Ltd, Pudong New Area Shanghai 200120 (CN); Steady New Material (Suzhou) Co., Ltd, Suzhou Industrial Park Suzhou, Jiangsu 215127 (CN)
(72) Inventor: LIU, Kai, Shanghai 200120 (CN); LI, Zhipeng, Shanghai 200120 (CN); FANG, Wangsheng, Shanghai 200120 (CN)
(74) Representative: Murgitroyd & Company
(86) International application number: PCT/CN2023/138235
(87) International publication number: WO 2024/244385

(56) References cited:
- CN-A- 109 913 161
- CN-A- 110 511 703
- CN-A- 110 699 013
- CN-A- 114 032 049
- CN-A- 116 333 656
- US-A1- 2008 213 515

## Description

### TECHNICAL FIELD

The present invention belongs to the technical field of adhesives, specially relates to the technical field of adhesives for protecting pole pieces of new energy batteries, and particularly relates to a hot melt adhesive for pole piece edge protection, a preparation method thereof and a protection method thereof.

### BACKGROUND

With the gradual popularization of new energy vehicles in recent years, the safety of electric vehicles has become one of the focuses of public attention, requirements for power batteries have accordingly raised. At present, preparation technique for a battery cell core is relatively mature, but there are still some limitations on the slitting and rolling of a pole piece. Slitting the pole piece will inevitably generate burrs, metal particles, and the like, which will pierce the diaphragm, and lead to an internal short circuit of the battery cell, thereby posing a safety hazard during the use of the battery cell, and seriously affecting the safety of the battery cell. Furthermore, due to the difference in extensibility between a current collector and an active layer, the pole piece forms a wavy edge in appearance after rolling, and edges of the substrate produce fine wrinkles, which will affect the precision of subsequent processes, thus affecting a quality rate of finished products.

Currently, adhesives with resins, such as polyvinylidene fluoride (PVDF) as a main body, are mainly used as an edge protection layer of the pole piece to reduce burr, powder loss, deformation and other problems. The Chinese patent CN 115000345A discloses a battery pole piece, which includes a pole piece body and pole tabs extending from edges of the pole piece body, each of the pole tabs includes a pole tab root portion connected to the pole piece body and a pole tab main body connected to the pole tab root portion; and at least one side of the pole tab root portion is provided with a pole tab adhesive layer, and the pole tab main body is provided with a reinforcement structure. Adhesive liquid of the adhesive layer at the pole tab root portion includes: 5-15% adhesive, 20-30% inorganic insulating filler, and 65-75% solvent; the adhesive is one or more of polyvinylidene fluoride (PVDF) powder, styrene-butadiene rubber, polyacrylic acid, polyacrylonitrile, and polyurethane; the inorganic insulating filler is one or more of alumina, aluminum hydroxide, and boehmite; and the solvent is N-Methyl-2-pyrrolidone (NMP). In the invention, two urgent problems in terms of the use of the adhesive liquid of the adhesive layer need to be solved immediately: (1) in order to control costs, a large amount of inorganic filler has been added to the adhesive, which significantly weakens a bonding strength thereof, and when being used, the battery cell core needs to be exposed to an electrolyte (ester solvent) at 30-40°C for a long period of time, causing the adhesive to gradually lose its effectiveness due to erosion of the solvent. It is very easy to be dislocated or fall off under severe vibration; and (2) the adhesive layer swells significantly in the ester solvent, causing the adhesive layer to expand over time, thereby leading to battery bulging. Furthermore, the adhesive liquid adopts a solvent dispersion method, which results in lower effective adhesive content, higher costs, and greater environmental risks associated with the solvent. The Chinese patent CN 110511703A discloses a hot melt adhesives, which includes polyolefin resin and tackifying resin. The polyolefin resin is an unmodified polyolefin resin (without polar functional groups), a polar functional group-modified polyolefin resin, or a combination thereof. This hot melt adhesives is used for bonding adapter sheets in batteries, such as connecting the positive electrode of an electrode sheet to the positive terminal of a battery cell via an aluminum adapter, or for connecting the negative electrode of an electrode sheet to the negative terminal of a battery cell via a copper adapter, or for joining adapters to the poles of battery cells. It requires high adhesive strength and excellent solvent resistance, but has no specific requirements for surface drying time.

Therefore, how to provide a pole piece edge protection adhesive that has high adhesion, high softening point, rapid surface drying, and electrolyte resistance, and to effectively apply the adhesive to edge protection of the pole piece have become urgent technical problems to be solved in the field.

### SUMMARY

In view of the defects in the prior art, the present invention aims to provide a hot melt adhesive for pole piece edge protection, a preparation method thereof and a protection method thereof. By reasonably selecting the components of the hot melt adhesive, the present invention can provide a pole piece edge protection adhesive with overall excellent performance, such as strong adhesive power, high softening point, rapid surface drying, and electrolyte resistance, with the aim of effectively preventing potential safety hazards caused by metal particles generated from the slitting process, avoiding poor appearance caused by wavy edges, and improving overall battery quality and quality rate of the process.

In a first aspect, the present invention provides a hot melt adhesive for pole piece edge protection, and the hot melt adhesive includes the following components in percent by weight:
polyolefin resin 30-60%
tackifying resin 20-40%
wax 5%-25%
mineral oil 2-10%
where the polyolefin resin is compounded by a first polyolefin group and a second polyolefin group in a mass ratio of (2-8) : 1; the first polyolefin group includes modified polypropylene with a density lower than 0.9 g/cm³ and a melt flow rate of 4-10 g/10 min at 230°C/2.16 kg; the modified polypropylene comprises acrylic acid modified polypropylene with a viscosity lower than 6000 mPa.s (cps) at 30°C, and/or maleic anhydride-modified polypropylene with a density of 0.89 ± 0.005 g/cm³, a melt flow rate of 4-6 g/10 min at 230°C/2.16 kg, and a maleic anhydride grafting rate of 1-5%; the second polyolefin group comprises a metallocene-catalyzed maleic anhydride-grafted polyolefin elastomer with a density of 0.85-0.88 g/cm³ and a melt flow rate greater than 600 g/10 min at 190°C/2.16 kg; the tackifying resin is selected from at least one of dicyclopentadiene resin, coumarone-indene resin, styrene-based resin, C5 petroleum resin, C9 petroleum resin, and C5-C9 copolymer resin; the mineral oil is selected from at least one of white oil, naphthenic oil, and paraffin oil; and the wax is selected from petroleum wax, synthetic wax, and mixtures thereof; the hot melt adhesive has a softening point above 100°C, and the softening point was measured as follows: the hot melt adhesive was melted in a ring-shaped mold and kept stand for 24 h, and a softening point was tested using a softening point tester; the hot melt adhesive has a melt viscosity below 5000 mPa.s (cps), and the melt viscosity was measured as follows: a temperature of a hot melt adhesive viscometer (Brookfield DV2T) was set to 180°C, 10.5 g of the hot melt adhesive was cut and added to a heating tube to melt, a No. 27 rotor was selected, a rotational speed was set after a temperature kept stable for 30 min to ensure that a torque fell within 20%-80%, reading could be made when viscosity data fluctuated less than 1% within 1 min; and the hot melt adhesive has surface drying time less than 5 min, and the surface drying time was measured as follows: 8 g of the hot melt adhesive was taken and placed in an aluminum foil box, which was then placed in a 170°C oven for 30 min, and the aluminum foil box was then taken out to record time required for the surface adhesive to completely cure.

Specifically, the present invention adopts two polyolefin groups for compounding, and resin compositions of the two groups are different, where the modified polypropylene included in the first polyolefin group can be mixed with modified polypropylenes with different modification methods, different molecular weights, different melt flow rates and/or different crystallinities, such that the modified polypropylene has a final density lower than 0.9 g/cm³, and a melt flow rate of 4-10 g/10 min at 230°C/2.16 kg, which is convenient for subsequent improvement of overall fluidity by mixing with the second polyolefin group, and can also provide the hot melt adhesive with excellent comprehensive properties such as bonding strength and solvent resistance.

Preferably, the wax can be specifically selected from at least one of PP wax, PE wax, maleic anhydride-modified polypropylene wax (PP-MA), and maleic anhydride-modified polyethylene wax (PE-MA).

Specifically, the PP wax having a high melting point (≥130°C) is preferred, accounting for more than 10% of the total raw materials. The PE wax can be selected from the polyethylene wax having a low molecular weight, with a number-average molecular weight ranging from 400 to 6000 g/mol. In addition, the PP wax and the PE wax can be compounded in varying ratios, preferably in a mass ratio of (5-15) : (3-10), the surface drying time of the hot melt adhesive can be less than 5 min, and preferably less than 3 min. Compounding the wax with other raw materials ensures that the softening point of the hot melt adhesive is above 100°C, and preferably between 120°C and 150°C.

A viscosity of the finished hot melt adhesive can be effectively adjusted by the content of the mineral oil and the tackifying resin, such that the viscosity of the hot melt adhesive at a melting temperature is less than 5000 mPa.s (cps), and preferably between 2000 mPa.s (cps) and 4000 mPa.s (cps).

Compounding the first polyolefin group and the second polyolefin group is conducive to improving the adhesive power of the hot melt adhesive, and the adhesive power is preferably greater than or equals to 0.02 N/mm.

Further, the functional filler accounts for 0.5-20% in percent by weight, including:
(1) colored filler with a light absorption effect at a range of 1000-1100 nm; and
(2) optionally, white filler.

The present invention does not necessary have to use the functional filler, but can use thermoplastic resin material as a main body to meet the basic requirements of the hot melt adhesive, and in combination with the slitting process of the knife die cutting. However, preferably, the hot melt adhesive can be colored by the colored filler in various colors such as black, blue, and/or yellow, such that a blank to be processed or a finished product has identifiable function, the requirements of different links/positions/processing parameters in the processing process are satisfied, and intelligent monitoring and control can be performed on the production process through advanced color/image recognition technologies, thereby facilitating large-scale automated production. Particularly preferably, the colored filler capable of absorbing light at the range of 1000-1100 nm can be used, with an addition amount of 0.5%-20%, and preferably 10-15%; and the laser die cutting is adopted as the processing method to cut out the pole tabs at an edge of the pole piece, such that the light absorption by the hot melt adhesive at a specific laser wavelength (such as 1064 nm) can be realized, and the dual requirements of laser cutting without edge shrinking under a specific power are satisfied, demonstrating the high efficiency and precision advantages of the laser cutting. In addition, by controlling a total content of the functional filler and adjusting a ratio of the colored filler to the white filler, the light absorption efficiency and color of the hot melt adhesive can be changed in various layers, such that the application range of the product is expanded.

Further, the colored filler and the white filler are compounded in a mass ratio of (3-5) : (3-8); the colored filler includes black filler, selected from at least one of insulating carbon black, copper manganese black, copper chrome black, black talc, and graphene; and the white filler includes at least one of boehmite, alumina, and aluminum hydroxide. When the colored filler provides various functional effects such as identification/light absorption, the white filler provides better insulation, thermal conductivity, reinforcement and other positive effects for the hot melt adhesive.

In order to improve the compatibility and dispersibility of the functional filler with the resin phase, the functional filler is preferably prepared/processed by the following method:
(1) dissolving dicumyl peroxide (DCP) in silane, and pre-mixing the silane with the colored filler, and the optionally selected white filler to obtain a filler premix;
(2) adding the filler premix and polypropylene to a granulation device; and
(3) stirring and heating to 120-150°C, and continuing to heat to 170-185°C after 5-10 min, and then extruding and granulating after 5-10 min.

In the process of preparing the functional filler, the present invention not only uses a silane coupling agent to activate surfaces of the colored filler and the white filler, but more importantly, the silane, the fillers, and the polypropylene are subjected to high-temperature treatment. Under the action of high temperature and an initiator, the silane will modify the polypropylene, forming functional filler containing silane-modified polypropylene as a carrier. Maleic anhydride, acrylic acid/acrylate, silane coupling agent, and the like, contain a plurality of polar groups in molecular structures thereof, such as aldehyde groups and hydroxyl groups, and the introduction of the plurality of polar groups into polyolefin can improve the compatibility with other inorganic and organic components, which is conducive to improving the adhesive strength. The present invention adopts an in-situ polymerization deposition method, where the functional filler is uniformly mixed with the resin carrier while the polypropylene is grafted and modified with the silane coupling agent. Beneficially, for the preparation method of the hot melt adhesive, when the functional filler is added to the resin phase in batches, the functional filler with the carrier added each time is more easily miscible with the surrounding resin phase, such that the uniformity of dispersion in the resin phase is improved. Specifically, the polypropylene can be selected from commercially available polypropylene, and a use amount of the polypropylene is 5-15% of the total mass of the modified polypropylene in the first polyolefin group; and preferably, an amount of the silane is 2-6 phr, an amount of the DCP is 0.15-0.25 phr, and an antioxidant (such as antioxidant 1010) can be appropriately added in an amount of 0.1-0.3 phr; The silane can be selected from at least one of vinyl trimethoxysilane (VTMS), vinyl triethoxysilane (VTEO), or vinyl tris(2-methoxyethoxy) silane (VTMES). Since the grafting activity is jointly determined by both the electronic effect and steric effect of a double bond of vinyl silane, and the methoxy group has a hyperconjugation effect smaller than that of the ethoxy group, and the ethoxy group has a volume larger than that of the methoxy group, and under comprehensive conditions, VTMS has the grafting activity higher than that of the VTEO, and is thus more preferred. Upon being heated, DCP will produce free radicals, and when a use amount is too small, a number of free radicals produced will be less, resulting in a low grafting rate. When the use amount is too much, free radicals produced will be excessive, which may easily cause side reactions such as macromolecular chain branching or self-crosslinking, resulting in excessively high viscosity of a grafting system, weakened fluidity, and deteriorated processing performance.

In a second aspect, the present invention provides a preparation method of the hot melt adhesive, including the following steps:
S1: completely melting the polyolefin resin, the tackifying resin, and the wax at 170°C-200°C in a reaction vessel under the protection of nitrogen or argon to obtain a resin phase; and a stirring speed is 30-50 rpm, and a stirring duration is 40-60 min;
S2: premixing the functional filler with the mineral oil through centrifugation at a high speed at a dispersion speed of 1800-2500 rpm for 2-3 times involving a total of 5-15 min to obtain a premix A; and
S3: adding the premix A to the completely molten resin phase in 3-5 times, dispersing at a high speed for 15 to 30 min at a dispersion speed of 1000-1500 rpm, cooling and curing to obtain a finished product of the hot melt adhesive.

In a third aspect, a method for pole piece edge protection using the hot melt adhesive, includes the following steps:
step 1: applying active slurry on the pole piece and making the active slurry cured to form an active material layer, and having one uncoated area between the active material layer and at least one edge of the pole piece formed a pole tab formation zone;
step 2: applying the molten hot melt adhesive on the pole tab formation zone at 170°C-220°C, covering at least part of the active material layer, cooling and curing to form a hot melt adhesive layer; and
step 3: cutting the laminated hot melt adhesive layer and the pole piece to form pole tabs, such that the hot melt adhesive at the edge melts and encapsulates at least part of a cross section of the pole piece.

Further, in the step 3, a laser die cutting method is adopted, where the hot melt adhesive at the edge is melted to encapsulate the cross section of the pole piece while die cutting the hot melt adhesive; or a knife die cutting can be adopted, where the hot melt adhesive at the edge is melted to encapsulate the cross section of the pole piece using a hot pressing roller after die cutting.

For the laser die cutting method, a cutting end surface can be basically completely covered by adjusting parameters such as a thickness of the adhesive layer, surface drying time, and viscosity. Specifically, an aluminum foil pole piece has a thickness of 8-15 µm, an active material layer has a thickness of 80-150 µm, and a hot melt adhesive layer has a thickness of 15-60 µm and a width of 5-15 mm, the hot melt adhesive layer covering the active material layer has a width of approximately 0.3-1 mm, and power of the laser die cutting is set between 1000-3000 W, with a cutting speed of 10-25 m/s.

For the knife die cutting method, rolling and encapsulation parameters of the hot pressing roller can be selected as follows: a temperature of 140-170°C, a pressure of 0. 1-0.5 MPa, and time of 0.05-0.5 s.

In addition, it is not limited to adding the hot pressing roller to quickly press the edge of the pole piece after the laser die cutting, so as to ensure that the cross section of the pole piece is completely encapsulated, further improving the safety of use.

The present invention has advantages as follows:
1. By selecting the types and proportions of each component, the hot melt adhesive in the present invention has a low viscosity, is solid at room temperature, but becomes liquid above 140°C. It can be used with various adhesive application devices and has good wettability to the substrate, providing strong adhesive power and better retention of metal particles during use. The hot melt adhesive has a high glass transition temperature (Tg), a high softening point, and rapid surface drying capability. Furthermore, it can meet the requirements for double-sided adhesive coating process, does not stick to the process roller, and ensures that the adhesive layer does not stick to itself after winding, allowing smooth unwinding. The hot melt adhesive in the present invention has moderate flexibility and is capable of being coated on an edge of a current collector near the active material layer, which can balance the difference in ductility between the edge of the current collector and the active material layer, and reduce the generation of wave edges and wrinkles.
2. During use, the hot melt adhesive in the present invention exhibits excellent solvent resistance, maintains stable physical and chemical properties in the electrolyte with minimal dissolution and swelling, thereby improving the reliability of the product for long-term use. In addition, the inorganic functional filler in the hot melt adhesive provides the product with recognizable function while meeting the laser cutting requirements during the manufacturing process.
3. The hot melt adhesive in the present invention has a simple preparation process, is cost-effective, requires no solvent throughout the process, and produces no by-products, and is environmentally friendly.

### BRIEF DESCRIPTION OF THE DRAWINGS

The detailed description below with reference to the accompanying drawings make the above and other objectives, features, and advantages of the exemplary embodiments of the present invention easier to understand. In the accompanying drawings, several embodiments of the present invention are shown in an exemplary and non-restrictive manner, and the same or corresponding reference numbers indicate the same or corresponding parts, specifically:

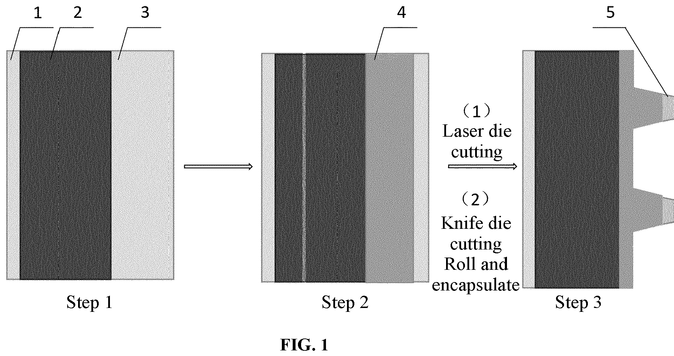

FIG. 1 illustrates a schematic flow chart of a method for pole piece edge protection using the hot melt adhesive according to the present invention.

Reference numerals in the accompanying drawings: 1. pole piece; 2. active material layer; 3. pole tab formation zone; 4. hot melt adhesive layer; and 5. pole tab.

### DETAILED DESCRIPTION OF EMBODIMENTS

In order to make the objects, technical solutions, and advantages of the present invention clearer, the present invention will be further described below.

The present invention provides a hot melt adhesive for pole piece edge protection, and the hot melt adhesive includes the following components in percent by weight:
(1) 30-60% polyolefin resin, compounded by a first polyolefin group and a second polyolefin group in a mass ratio of (2-8) : 1, and components in the first polyolefin group and the second polyolefin group are different, specifically:
   (1.1) the first polyolefin group includes at least one of the following:
      (a) acrylic acid-modified polypropylene, with a viscosity below 6000 mPa.s (cps) at 30°C; and
      (b) maleic anhydride-modified polypropylene, with a density of 0.89±0.005 g/cm³, a melt flow rate of 4-6 g/10 min at 230°C/2.16 kg, and a maleic anhydride grafting rate of 1-5%;
   (1.2) the second polyolefin group includes a metallocene-catalyzed maleic anhydride-grafted polyolefin elastomer with a density of 0.85-0.88 g/cm³ and a melt flow rate greater than 600 g/10 min at 190°C/2.16 kg;
(2) 20-40% tackifying resin, which is selected from at least one of dicyclopentadiene resin, coumarone-indene resin, styrene-based resin, C5 petroleum resin, C9 petroleum resin, and C5-C9 copolymer resin;
(3) 5%-25% wax, which is selected from petroleum wax, synthetic wax, and mixtures thereof, specifically from at least one of PP wax, PE wax, maleic anhydride-modified polypropylene wax (PP-MA), and maleic anhydride-modified polyethylene wax (PE-MA); and preferably from the PP wax with a high melting point (≥130°C), accounting for more than 10% of the total raw materials. The PE wax can be selected from the polyethylene wax having a low molecular weight, with a number-average molecular weight ranging from 400 to 6000 g/mol. More preferably, the PP wax and the PE wax are compounded in a mass ratio of (5-15) : (3-10);
(4) 2-10% mineral oil, which is selected from at least one of white oil, naphthenic oil, and paraffin oil; and
(5) 0-20% functional filler, preferably 0.5-20%, including:
   (5.1) colored filler with a light absorption effect at a range of 1000-1100 nm; and
   (5.2) optionally, white filler;
   preferably, the colored filler and the white filler are compounded in a mass ratio of (3-5) : (3-8); the colored filler includes black filler, selected from at least one of insulating carbon black, copper manganese black, copper chrome black, black talc, and graphene; and the white filler includes at least one of boehmite, alumina, and aluminum hydroxide. More preferably, the functional filler is prepared by the following method:
   (a) dissolving dicumyl peroxide (DCP) in silane, and pre-mixing the silane with the colored filler, and the optionally selected white filler to obtain a filler premix; where an amount of the silane is 2-6 phr, an amount of the DCP is 0.15-0.25 phr, and an antioxidant (such as antioxidant 1010) can be appropriately added in an amount of 0.1-0.3 phr;
   (b) adding the filler premix and polypropylene to a granulation device; an amount of the polypropylene is 5-15% of the total mass of the modified polypropylene in the first polyolefin group; and
   (c) stirring and heating to 120-150°C, and continuing to heat to 170-185°C after 5-10 min, and then extruding and granulating after 5-10 min.

A preparation method of the hot melt adhesive for pole piece edge protection includes the following steps:
S1: completely melting the polyolefin resin, the tackifying resin, and the wax at 170°C-200°C in a reaction vessel under the protection of nitrogen or argon to obtain a resin phase;
S2: premixing the functional filler with the mineral oil through centrifugation at a high speed to obtain a premix A; and
S3: adding the premix A to the completely molten resin phase in 3-5 times, dispersing at a high speed, cooling and curing to obtain a finished product of the hot melt adhesive. The finished product of the hot melt adhesive includes, but is not limited to, the following properties: having a softening point above 100°C, a melt viscosity below 5000 mPa.s (cps), and surface drying time less than 5 min.

Specific application scenarios and methods of the hot melt adhesive for pole piece edge protection will be further described in conjunction with FIG. 1

A method for pole piece edge protection using the hot melt adhesive includes the following steps:
step 1: applying active slurry on the pole piece 1 and making the active slurry cured to form an active material layer 2, and having one uncoated area between the active material layer 2 and at least one edge of the pole piece 1 formed a pole tab formation zone 3;
step 2: applying the molten hot melt adhesive on the pole tab formation zone 3, covering at least part of the active material layer 2, cooling and curing to form a hot melt adhesive layer 4; and
step 3: cutting the laminated hot melt adhesive layer 4 and the pole piece 1 to form pole tabs 5, such that the hot melt adhesive at the edge melts and encapsulates at least part of a cross section of the pole piece. Specifically, a method for cutting can be selected from the laser die cutting, where the hot melt adhesive at the edge is melted to encapsulate at least part of the cross section of the pole piece while die cutting the hot melt adhesive; or knife die cutting can be adopted, where the hot melt adhesive at the edge is melted to encapsulate at least part of the cross section of the pole piece using a hot pressing roller after die cutting. Optionally, after laser die-cutting, rolling pressure can be performed again using the hot pressure roller to ensure that the cross section of the edge of the pole piece is fully encapsulated.

### Example 1

Under nitrogen protection, a temperature was set to 200°C, the maleic anhydride-modified polypropylene in the first polyolefin group, the maleic anhydride-grafted polyolefin elastomer in the second polyolefin group, the tackifying resin and the wax were added, heated and stirred until completely melted, the premix A of the functional filler and the mineral oil was added, vacuuming was performed, dispersion was performed at a high speed at 1000 rpm for 20 min until uniform dispersion was completed, filtering and cooling were then performed to obtain the finished hot melt adhesive samples A1-A6. The specific material compositions were shown in Table 1.

**Table 1: Material Compositions of Samples A1-A6 in Example 1 (wt%)**

| Components | Product name | A1 | A2 | A3 | A4 | A5 | A6 |
|---|---|---|---|---|---|---|---|
| Maleic | ADMER | 30 | 30 | 40 | 30 | 30 | 30 |
| anhydride-modified polypropylene | QF551 | | | | | | |
| Maleic anhydride-grafted polyolefin elastomer | AFFINITY GA1000R | 5 | 10 | 10 | 5 | 10 | 10 |
| Tackifying resin | Escorez5340 | 30 | 35 | 20 | 20 | 30 | 30 |
| PP wax | Licocene PP2502 | 10 | 10 | 5 | 15 | 10 | - |
| PE wax | H-110 | 5 | 5 | 5 | 10 | - | 10 |
| Mineral oil | KUKDONG LP350 | 10 | 10 | 10 | 10 | 10 | 10 |
| Boehmite | JT1472 | 7 | 7 | 7 | 7 | 7 | 7 |
| Carbon black | Orion special black 4A | 3 | 3 | 3 | 3 | 3 | 3 |

### Example 2

Under nitrogen protection, a temperature was set to 200°C, the maleic anhydride-modified polypropylene in the first polyolefin group, the maleic anhydride-grafted polyolefin elastomer in the second polyolefin group, the tackifying resin and the wax were added, heated and stirred until completely melted, the premix A made from the functional filler and the mineral oil was added, vacuuming was performed, dispersion was performed at a high speed at 1000 rpm for 20 min until uniform dispersion was completed, filtering and cooling were then performed to obtain the finished hot melt adhesive samples B1-B6. The specific material compositions were shown in Table 2.

**Table 2: Material Compositions of Samples B1-B6 in Example 2 (wt%)**

| Components | Product name | B1 | B2 | B3 | B4 | B5 | B6 |
|---|---|---|---|---|---|---|---|
| Maleic anhydride-modified polypropylene | ADMER QF551 | 30 | 30 | 30 | 30 | 30 | 30 |
| Maleic anhydride-grafted polyolefin elastomer | AFFINITY GA1000R | 10 | 10 | 10 | 10 | 10 | 10 |
| Tackifying resin | Escorez5340 | 35 | 35 | 35 | 35 | 35 | 35 |
| PP wax | Licocene PP2502 | 10 | 10 | 10 | 10 | 10 | 10 |
| PE wax | H-110 | 5 | 5 | 5 | 5 | 5 | 5 |
| Mineral oil | KUKDONG LP350 | 10 | 10 | 10 | 5 | 5 | 5 |
| Boehmite | JT1472 | 5 | 5 | 5 | 10 | 10 | 10 |
| Carbon black | Orion special black 4A | 5 | - | - | 5 | - | - |
| Phthalocyanine | Zibo Fuyan FY1458 | - | 5 | - | - | 5 | - |
| Cadmopone | NLT-102 | - | - | 5 | - | - | 5 |

### Example 3

Referring to the preparation method and material composition of the sample A2 from Example 1, a finished hot melt adhesive sample C1 was obtained; and similarly, referring to the preparation method and material composition of the sample B1 from Example 2, a finished hot melt adhesive Sample C2 was obtained. Main differences between the sample C1 and the sample A2, and the sample C2 and the sample B1 were that the functional fillers in the samples C1 and C2 were prepared/treated by the following method:
(1) 0.2 phr of dicumyl peroxide (DCP) and 0.1hpr of antioxidant (such as antioxidant 1010) were dissolved in 5 phr of silane (VTMS), and the silane was premixed with the functional filler raw material to obtain a filler premix;
(2) the filler premix and polypropylene were added to the granulation device; and
(3) stirring and heating to 130°C, and continuing to heat to 175°C after 10 min, and then extruding and granulating after 8 min to obtain an optimized functional filler.

### Performance test

The hot melt adhesive samples A1-A6 and B1-B6 from the above examples were subjected to the following performance tests. Specific testing methods were as follows, and test results were shown in Table 3:
(1) Viscosity test
   Test method: a temperature of a hot melt adhesive viscometer (Brookfield DV2T) was set to 180°C, 10.5 g of the hot melt adhesive was cut and added to a heating tube to melt. A No. 27 rotor was selected, a rotational speed was set after a temperature kept stable for 30 min to ensure that a torque fell within 20%-80%. Reading could be made when viscosity data fluctuated less than 1% within 1 min.
(2) Softening point test
   Test method: the hot melt adhesive was melted in a ring-shaped mold and kept stand for 24 h, and a softening point of the material was tested using a softening point tester.
(3) Test of adhesive power to aluminum/copper foil
   Test method: sample films with a thickness of 20 µm - 30 µm were made on a 170°C film applicator by using aluminum foil and copper foil as substrates, the sample films were cutting into sample strips of 20 mm × 100 mm, the sample strips were fixed on a backing board, with an adhesive layer thereof facing a double-sided adhesive layer, and samples were subjected to 180° peel at a peeling speed of 50 mm/min; and 5 samples of each formulation were tested, and an average value of test results were taken.
(4) Adhesive power after immersion
   Test method: sample films with a thickness of 20 µm-30 µm were made on a 170°C film applicator by using aluminum foil and copper foil as substrates, the sample films were cutting into sample strips of 20 mm × 100 mm, and the sample strips were placed in 30 ml of electrolyte and sealed, then stored in an 85°C oven for 24 h, and then taken out to test 180° peeling force thereof at a peeling speed of 50 mm/min; and 5 samples of each formulation were tested, and an average value of test results were taken.
(5) Dissolution rate
   Test method: 0.5 g of the hot melt adhesive was taken and soaked in 25 g of electrolyte, then placed in a 70°C oven and aged for 48 h, a weighing pan was weighed to obtain its weight (M2), the electrolyte that has soaked the hot melt adhesive was poured into the weighing pan, which was then placed in a 180°C oven for 2 h, the weighing pan was weighted again to get a weight M3. The dissolution rate was calculated and obtained according to a formula: (M3-M2)/0.5.
(6) Surface drying time
   Test method: 8 g of the hot melt adhesive was taken and placed in an aluminum foil box, which was then placed in a 170°C oven for 30 min, and the aluminum foil box was then taken out to record time required for the surface adhesive to completely cure.
(7) Surface viscosity test
   Test method: a film sample with an aluminum foil substrate and an adhesive layer thickness of 20 µm was prepared, the sample was cut into sample strips of 40 mm × 10 mm, two of the sample strips were put together with adhesive surfaces together and then placed them between two steel plates, a combination of the sample stripes and the steel plates was horizontally placed in a flat vulcanizer, a pressure and pressure-holding time were kept, and a T-peeling test was performed at a peeling speed of 50 mm/min after the combination was removed from the flat vulcanizer; and 5 samples of each formulation were tested, and an average value of test results were taken.

**Table 3: Test Results of Samples in Examples 1-3**

| Sample | Viscosity/mPa.s (cps) | Softening point/°C | Adhesive power/N/mm | | Adhesive power after immersion/N/mm | | Dissolution rate | Surface drying time/min | Surface viscosity /N×mm⁻¹ |
|---|---|---|---|---|---|---|---|---|---|
| | | | Aluminum foil | Copper foil | Aluminum foil | Copper foil | | | |
| A1 | 3223 | 145 | 0.51 | 0.46 | 0.21 | 0.22 | 3.1% | 3.5 | 0.066 |
| A2 | 3025 | 138 | 0.59 | 0.47 | 0.25 | 0.24 | 2.8% | 3.8 | 0.058 |
| A3 | 4329 | 125 | 0.77 | 0.70 | 0.31 | 0.36 | 3.5% | 3.6 | 0.39 |
| A4 | 3675 | 127 | 0.30 | 0.26 | 0.11 | 0.15 | 4.1% | 2.5 | 0.025 |
| A5 | 2816 | 142 | 0.63 | 0.61 | 0.33 | 0.28 | 4.3% | 4.1 | 0.045 |
| A6 | 2667 | 132 | 0.57 | 0.55 | 0.24 | 0.21 | 4.4% | 3.0 | 0.16 |
| B1 | 3088 | 138 | 0.59 | 0.45 | 0.26 | 0.24 | 2.8% | 3.8 | 0.057 |
| B2 | 3026 | 138 | 0.60 | 0.50 | 0.26 | 0.25 | 2.9% | 3.6 | 0.055 |
| B3 | 3375 | 138 | 0.58 | 0.49 | 0.27 | 0.25 | 2.8% | 3.7 | 0.051 |
| B4 | 3951 | 138 | 0.32 | 0.31 | 0.15 | 0.17 | 2.5% | 3.2 | 0.040 |
| B5 | 4026 | 138 | 0.31 | 0.31 | 0.15 | 0.15 | 2.6% | 3.2 | 0.043 |
| B6 | 4417 | 138 | 0.30 | 0.31 | 0.14 | 0.13 | 2.5% | 3.1 | 0.047 |
| C1 | 2647 | 138 | 0.67 | 0.59 | 0.28 | 0.27 | 2.8% | 3.5 | 0.050 |
| C2 | 2515 | 138 | 0.61 | 0.55 | 0.25 | 0.28 | 2.8% | 2.4 | 0.054 |

## Claims

1. A hot melt adhesive for pole piece edge protection, **characterized by** comprising the following components in percent by weight:
polyolefin resin 30-60%
tackifying resin 20-40%
wax 5%-25%
mineral oil 2-10%
the polyolefin resin is compounded by a first polyolefin group and a second polyolefin group in a mass ratio of (2-8):1;
the first polyolefin group comprises modified polypropylene with a density lower than 0.9 g/cm³ and a melt flow rate of 4-10 g/10 min at 230°C/2.16 kg; the modified polypropylene comprises acrylic acid modified polypropylene with a viscosity lower than 6000 mPa.s (cps) at 30°C, and/or maleic anhydride-modified polypropylene with a density of 0.89 ± 0.005 g/cm³, a melt flow rate of 4-6 g/10 min at 230°C/2.16 kg, and a maleic anhydride grafting rate of 1-5%;
the second polyolefin group comprises a metallocene-catalyzed maleic anhydride-grafted polyolefin elastomer with a density of 0.85-0.88 g/cm³ and a melt flow rate greater than 600 g/10 min at 190°C/2.16 kg;
the tackifying resin is selected from at least one of dicyclopentadiene resin, coumarone-indene resin, styrene-based resin, C5 petroleum resin, C9 petroleum resin, and C5-C9 copolymer resin; the mineral oil is selected from at least one of white oil, naphthenic oil, and paraffin oil; and the wax is selected from petroleum wax, synthetic wax, and mixtures thereof;
the hot melt adhesive has a softening point above 100°C, and the softening point was measured as follows: the hot melt adhesive was melted in a ring-shaped mold and kept stand for 24 h, and a softening point was tested using a softening point tester;
the hot melt adhesive has a melt viscosity below 5000 mPa.s (cps), and the melt viscosity was measured as follows: a temperature of a hot melt adhesive viscometer (Brookfield DV2T) was set to 180°C, 10.5 g of the hot melt adhesive was cut and added to a heating tube to melt, a No. 27 rotor was selected, a rotational speed was set after a temperature kept stable for 30 min to ensure that a torque fell within 20%-80%, reading could be made when viscosity data fluctuated less than 1% within 1 min; and
the hot melt adhesive has surface drying time less than 5 min, and the surface drying time was measured as follows: 8 g of the hot melt adhesive was taken and placed in an aluminum foil box, which was then placed in a 170°C oven for 30 min, and the aluminum foil box was then taken out to record time required for the surface adhesive to completely cure.

2. The hot melt adhesive according to claim 1, **characterized in that** the hot melt adhesive also includes functional filler, the functional filler accounts for 0.5-20% in percent by weight, comprising:
(1) colored filler with a light absorption effect at a range of 1000-1100 nm; and
(2) optionally, white filler.

3. The hot melt adhesive according to claim 2, **characterized in that** the colored filler and the white filler are compounded in a mass ratio of (3-5) : (3-8); the colored filler comprises black filler, selected from at least one of insulating carbon black, copper manganese black, copper chrome black, black talc, and graphene; and the white filler comprises at least one of boehmite, alumina, and aluminum hydroxide.

4. A preparation method of the hot melt adhesive for pole piece edge protection according to any one of claims 1-3, **characterized by** comprising the following steps:
S1: completely melting the polyolefin resin, the tackifying resin, and the wax at 170°C-200°C in a reaction vessel under the protection of nitrogen or argon to obtain a resin phase;
S2: premixing the functional filler with the mineral oil through centrifugation at a high speed to obtain a premix A; and
S3: adding the premix A to the completely molten resin phase in 3-5 times, dispersing at a high speed, cooling and curing to obtain a finished product of the hot melt adhesive.

5. A method for pole piece edge protection using the hot melt adhesive according to any one of claims 1-3, **characterized by** comprising the following steps:
step 1: applying active slurry on the pole piece and making the active slurry cured to form an active material layer, and having one uncoated area between the active material layer and at least one edge of the pole piece formed a pole tab formation zone;
step 2: applying the molten hot melt adhesive on the pole tab formation zone, covering at least part of the active material layer, cooling and curing to form a hot melt adhesive layer; and
step 3: cutting the laminated hot melt adhesive layer and the pole piece to form pole tabs, such that the hot melt adhesive at the edge melts and encapsulates at least part of a cross section of the pole piece.

6. The method for pole piece edge protection according to claim 5, **characterized in that** in the step 3, a laser die cutting method is adopted, and the hot melt adhesive at the edge is melted to encapsulate the cross section of the pole piece while die cutting the hot melt adhesive; or a knife die cutting can be adopted, and the hot melt adhesive at the edge is melted to encapsulate the cross section of the pole piece using a hot pressing roller after die cutting.

## Patentansprüche

1. Schmelzklebstoff für den Kantenschutz von Elektrodenfolien, **dadurch gekennzeichnet, dass** er folgende Bestandteile in Gewichtsprozent umfasst:
Polyolefinharz 30-60 %,
Klebrigmacherharz 20-40 %,
Wachs 5-25 %,
Mineralöl 2-10 %;
wobei das Polyolefinharz aus einer ersten Polyolefingruppe und einer zweiten Polyolefingruppe in einem Massenverhältnis von (2-8):1 gemischt ist;
wobei die erste Polyolefingruppe ein modifiziertes Polypropylen mit einer Dichte von weniger als 0,9 g/cm³ und einer Schmelzflussrate von 4-10 g/10 min bei 230 °C/2,16 kg umfasst; wobei das modifizierte Polypropylen ein acrylicsäuremodifiziertes Polypropylen mit einer Viskosität von weniger als 6000 mPa·s (cps) bei 30 °C und/oder ein maleinsäureanhydridmodifiziertes Polypropylen mit einer Dichte von 0,89 ± 0,005 g/cm³, einer Schmelzflussrate von 4-6 g/10 min bei 230 °C/2, 16 kg und einer Maleinsäureanhydrid-Pfropfungsrate von 1-5 % umfasst;
wobei die zweite Polyolefingruppe einen metallocenkatalysierten, mit Maleinsäureanhydrid gepfropften Polyolefinelastomer umfasst, der eine Dichte von 0,85-0,88 g/cm³ und eine Schmelzflussrate von mehr als 600 g/10 min bei 190 °C/2, 16 kg aufweist;
wobei das Klebrigmacherharz aus mindestens einem von Dicyclopentadienharz, Cumaron-Inden-Harz, Styrolharz, C5-Petroleumharz, C9-Petroleumharz und C5-C9-Copolymerharz ausgewählt ist; wobei das Mineralöl aus mindestens einem von Weißöl, Naphthenöl und Paraffinöl ausgewählt ist; und wobei das Wachs aus Petroleumwachs, Synthesewachs und Mischungen davon ausgewählt ist;
wobei der Schmelzklebstoff einen Erweichungspunkt oberhalb 100 °C aufweist, und wobei der Erweichungspunkt wie folgt gemessen wurde: der Schmelzklebstoff in einer ringförmigen Form geschmolzen und 24 Stunden lang stehen gelassen wurde, und ein Erweichungspunkt mit einem Erweichungspunktprüfgerät getestet wurde;
wobei der Schmelzklebstoff eine Schmelzviskosität unterhalb 5000 mPa·s (cps) aufweist, und wobei die Schmelzviskosität wie folgt gemessen wurde: die Temperatur eines Schmelzklebstoffviskosimeters (Brookfield DV2T) auf 180 °C eingestellt wurde, 10,5 g des Schmelzklebstoffs abgeschnitten und in ein Heizrohr gegeben wurde, um ihn zu schmelzen, ein Rotor Nr. 27 ausgewählt wurde, eine Drehzahl nach 30-minütiger Temperaturstabilisierung eingestellt wurde, um sicherzustellen, dass ein Drehmoment innerhalb von 20 %-80 % fiel, und abgelesen werden konnte, wenn die Viskositätsdaten innerhalb von 1 Minute um weniger als 1 % schwankten; und wobei der Schmelzklebstoff eine Oberflächentrocknungszeit von weniger als 5 Minuten aufweist, und wobei die Oberflächentrocknungszeit wie folgt gemessen wurde: 8 g des Schmelzklebstoffs genommen und in eine Aluminiumfolienbox gegeben wurde, die dann in einen 170 °C heißen Ofen für 30 Minuten gestellt wurde, und anschließend die Aluminiumfolienbox herausgenommen wurde, um die Zeit zu protokollieren, die benötigt wurde, bis der Oberflächenklebstoff vollständig ausgehärtet war.

2. Schmelzklebstoff nach Anspruch 1, **dadurch gekennzeichnet, dass** der Schmelzklebstoff ferner einen funktionellen Füllstoff umfasst, wobei der funktionelle Füllstoff einen Gewichtsanteil von 0,5-20 % ausmacht, umfassend:
(1) einen farbigen Füllstoff mit einer Lichtabsorptionswirkung in einem Bereich von 1000-1100 nm; und
(2) optional einen weißen Füllstoff.

3. Schmelzklebstoff nach Anspruch 2, **dadurch gekennzeichnet, dass** der farbige Füllstoff und der weiße Füllstoff in einem Massenverhältnis von (3-5) : (3-8) gemischt werden; wobei der farbige Füllstoff einen schwarzen Füllstoff umfasst, der aus mindestens einem von isolierendem Carbon Black, Kupfermangan-Schwarz, Kupferchrom-Schwarz, schwarzem Talkum und Graphen ausgewählt ist; und wobei der weiße Füllstoff mindestens eines von Böhmit, Aluminiumoxid und Aluminiumhydroxid umfasst.

4. Verfahren zur Herstellung des Schmelzklebstoffs für den Kantenschutz von Elektrodenfolien nach einem der Ansprüche 1 bis 3, **dadurch gekennzeichnet, dass** es die folgenden Schritte umfasst:
S1: vollständiges Schmelzen des Polyolefinharzes, des Klebrigmacherharzes und des Wachses bei 170 °C-200 °C in einem Reaktionsgefäß unter Schutzgas von Stickstoff oder Argon, um eine Harzphase zu erhalten;
S2: Vormischen des funktionellen Füllstoffs mit dem Mineralöl durch Zentrifugation bei hoher Geschwindigkeit, um eine Vormischung A zu erhalten; und
S3: Zugeben der Vormischung A in 3-5 Portionen zu der vollständig geschmolzenen Harzphase, Dispergieren bei hoher Geschwindigkeit, Abkühlen und Aushärten, um ein Fertigprodukt des Schmelzklebstoffs zu erhalten.

5. Verfahren zum Kantenschutz von Elektrodenfolien unter Verwendung des Schmelzklebstoffs nach einem der Ansprüche 1 bis 3, **dadurch gekennzeichnet, dass** es die folgenden Schritte umfasst:
S1: Aufbringen einer Aktivpaste auf die Elektrodenfolie und Aushärten der Aktivpaste unter Bildung einer Aktivmaterialschicht, wobei ein unbeschichteter Bereich zwischen der Aktivmaterialschicht und mindestens einem Rand der Elektrodenfolie gebildet wird, der eine Anschlussfahnen-Bildungszone darstellt;
S2: Aufbringen des geschmolzenen Schmelzklebstoffs auf die Anschlussfahnen-Bildungszone, wobei mindestens ein Teil der Aktivmaterialschicht bedeckt wird, anschließend Abkühlen und Aushärten unter Bildung einer Schmelzklebstoffschicht; und
S3: Schneiden der laminierten Schmelzklebstoffschicht und der Elektrodenfolie unter Bildung von Anschlussfahnen, derart dass der Schmelzklebstoff am Rand schmilzt und mindestens einen Teil eines Querschnitts der Elektrodenfolie umschließt.

6. Verfahren zum Kantenschutz von Elektrodenfolien nach Anspruch 5, **dadurch gekennzeichnet, dass** in S3 ein Laserstanzverfahren angewendet wird, wobei der Schmelzklebstoff am Rand geschmolzen wird, um den Querschnitt der Elektrodenfolie zu umschließen, während der Schmelzklebstoff gleichzeitig gestanzt wird; oder dass ein Messerstanzverfahren angewendet werden kann, wobei der Schmelzklebstoff am Rand geschmolzen wird, um den Querschnitt der Elektrodenfolie nach dem Stanzen mit einer Heißprägewalze zu umschließen.

## Revendications

1. Adhésif thermofusible destiné à la protection de bord d'une pièce polaire, **caractérisé en ce que**, il comprend des composants suivants, exprimés en pourcentage en poids :
une résine de polyoléfine de 30 à 60 %
une résine collante de 20 à 40 %
de la cire de 5 % à 25 %
de l'huile minérale de 2 à 10 %
la résine de polyoléfine est composée d'un premier groupe de polyoléfines et d'un second groupe de polyoléfines dans un rapport massique de (2 à 8) : 1 ;
le premier groupe de polyoléfines comprend du polypropylène modifié ayant une densité inférieure à 0,9 g/cm³ et un indice de fluidité à chaud de 4 à 10 g/10 min à 230 °C/2,16 kg ; le polypropylène modifié comprend du polypropylène modifié par un acide acrylique ayant une viscosité inférieure à 6 000 mPa.s (cps) à 30 °C, et/ou du polypropylène modifié par de l'anhydride maléique ayant une densité de 0,89 ± 0,005 g/cm³, un indice de fluidité à chaud de 4 à 6 g/10 min à 230 °C/2, 16 kg, et un taux de greffage d'anhydride maléique de 1 à 5 % ;
le second groupe de polyoléfines comprend un élastomère de polyoléfine greffé à l'anhydride maléique et catalysé par un métallocène, ayant une densité de 0,85 à 0,88 g/cm³ et un indice de fluidité à chaud supérieur à 600 g/10 min à 190 °C/2,16 kg ;
la résine collante est choisie parmi au moins l'une parmi une résine de dicyclopentadiène, une résine de coumarone-indène, une résine à base de styrène, une résine de pétrole en C5, une résine de pétrole en C9 et une résine de copolymère en C5 à C9 ; l'huile minérale est choisie parmi au moins l'une parmi de l'huile blanche, de l'huile naphténique et de l'huile de paraffine ; et la cire est choisie parmi de la cire de pétrole, de la cire synthétique et de mélanges de celles-ci ;
l'adhésif thermofusible présente un point de ramollissement supérieur à 100 °C, et le point de ramollissement a été mesuré comme suit : l'adhésif thermofusible a été fondu dans un moule en forme d'anneau et laissé au repos pendant 24 h, puis un point de ramollissement a été déterminé à l'aide d'un appareil de mesure de point de ramollissement ;
l'adhésif thermofusible présente une viscosité à l'état fondu inférieure à 5 000 mPa.s (cps), et la viscosité a été mesurée comme suit : une température d'un viscosimètre pour adhésifs thermofusibles (Brookfield DV2T) a été réglée à 180 °C ; 10,5 g d'adhésif thermofusible ont été découpés et ajoutés à un tube chauffant pour être fondus ; un rotor n° 27 a été sélectionné, une vitesse de rotation a été réglée après que la température se soit stabilisée pendant 30 min afin de s'assurer qu'un couple soit compris entre 20 % et 80 % ; la lecture pouvait être effectuée lorsque des données de viscosité variaient de moins de 1 % en l'espace de 1 min ; et l'adhésif thermofusible présente un temps de séchage en surface inférieur à 5 min, le temps de séchage en surface ayant été mesuré comme suit : 8 g de l'adhésif thermofusible ont été prélevés et mis dans une boîte en papier d'aluminium, qui a ensuite été mise dans un four à 170 °C pendant 30 min, puis la boîte en papier d'aluminium a été retirée pour enregistrer le temps nécessaire pour que l'adhésif de surface durcisse complètement.

2. Adhésif thermofusible selon la revendication 1, **caractérisé en ce que**, l'adhésif thermofusible comporte également une charge fonctionnelle, la charge fonctionnelle représentant 0,5 à 20 % en pourcentage en poids, comprenant :
(1) une charge colorée présentant un effet d'absorption de la lumière dans une plage allant de 1 000 à 1 100 nm ; et
(2) optionnellement, une charge blanche.

3. Adhésif thermofusible selon la revendication 2, **caractérisé en ce que**, la charge colorée et la charge blanche sont mélangées dans un rapport massique de (3 à 5) : (3 à 8) ; la charge colorée comprend une charge noire, choisie parmi au moins l'un parmi du noir de carbone isolant, du noir de cuivre-manganèse, du noir de cuivre-chrome, du talc noir et du graphène ; et la charge blanche comprend au moins l'un parmi de la boehmite, de l'alumine et de l'hydroxyde d'aluminium.

4. Procédé de préparation de l'adhésif thermofusible destiné à la protection de bord d'une pièce polaire selon l'une quelconque des revendications 1 à 3, **caractérisé en ce qu'**il comprend les étapes suivantes consistant à :
S1 : faire fondre complètement la résine de polyoléfine, la résine collante et la cire à une température de 170 °C à 200 °C dans une cuve de réaction sous atmosphère d'azote ou d'argon, afin d'obtenir une phase de résine ;
S2 : prémélanger la charge fonctionnelle avec l'huile minérale par centrifugation à grande vitesse, afin d'obtenir un prémélange A ; et
S3 : ajouter le prémélange A à la phase de résine entièrement fondue en 3 à 5 fois, disperser à grande vitesse, refroidir et durcir, afin d'obtenir un produit fini de l'adhésif thermofusible.

5. Procédé de protection de bord d'une pièce polaire à l'aide de l'adhésif thermofusible selon l'une quelconque des revendications 1 à 3, **caractérisé en ce qu'**il comprend les étapes suivantes consistant à :
étape 1 : appliquer une pâte active sur la pièce polaire et laisser la pâte active durcir afin de former une couche de matériau actif, et disposer une zone non revêtue entre la couche de matériau actif et au moins un bord de la pièce polaire, formant une zone de formation de languette polaire ;
étape 2 : appliquer l'adhésif thermofusible fondu sur la zone de formation de languette polaire, recouvrir au moins une partie de la couche de matériau actif, puis refroidir et durcir afin de former une couche d'adhésif thermofusible ; et
étape 3 : découper la couche d'adhésif thermofusible stratifiée et la pièce polaire afin de former des languettes polaires, de sorte que l'adhésif thermofusible situé au niveau du bord fonde et encapsule au moins une partie d'une section transversale de la pièce polaire.

6. Procédé de protection de bord d'une pièce polaire selon la revendication 5, **caractérisé en ce que**, à l'étape 3, un procédé de découpage à l'emporte-pièce au laser est adopté, et l'adhésif thermofusible situé au niveau du bord est fondu pour encapsuler la section transversale de la pièce polaire pendant le découpage à l'emporte-pièce de l'adhésif thermofusible ; ou, le découpage à l'emporte-pièce au couteau peut être adopté, et l'adhésif thermofusible situé au niveau du bord est fondu pour encapsuler la section transversale de la pièce polaire à l'aide d'un rouleau de pression à chaud après le découpage à l'emporte-pièce.
